Europäisches Patentamt

European Patent Office

Office européen des brevets

(11) Publication number: **0 221 775 B1**

# EUROPEAN PATENT SPECIFICATION

(45) Date of publication of patent specification: **09.10.91**　(51) Int. Cl.⁵: **G05B 9/03**, G21D 3/04

(21) Application number: **86308455.4**

(22) Date of filing: **30.10.86**

(54) Testable voted logic power circuit and method of testing the same.

(30) Priority: **31.10.85 US 793383**
　　　　　**31.10.85 US 793422**

(43) Date of publication of application:
　　**13.05.87 Bulletin 87/20**

(45) Publication of the grant of the patent:
　　**09.10.91 Bulletin 91/41**

(84) Designated Contracting States:
　　**BE CH FR GB IT LI SE**

(56) References cited:
　　**FR-A- 2 494 034**
　　**US-A- 3 967 257**

　　**IEEE MICRO, vol. 4, no. 6, December 1984,
　　pages 22-33, IEEE, New York, US; W.F.
　　McGILL et al.: " Fault tolerance in continu-
　　ous process control"**

(73) Proprietor: **WESTINGHOUSE ELECTRIC COR-
　　PORATION
　　Westinghouse Building Gateway Center
　　Pittsburgh Pennsylvania 15235(US)**

(72) Inventor: **Cook, Bruce Michael
　　425 Tivoli Road
　　Pittsburgh, PA 15239(US)**
　　Inventor: **Cook, Henry Freeman
　　6846 Alcoma Drive
　　Pittsburgh, PA 15235(US)**
　　Inventor: **Gutman, Jerzy
　　758 Bar Harbor Drive
　　Pittsburgh, PA 15239(US)**

(74) Representative: **van Berlyn, Ronald Gilbert
　　23, Centre Heights
　　London, NW3 6JG(GB)**

## Description

## BACKGROUND OF THE INVENTION

Field of the Invention:

The invention is directed to protection systems used to provide reliable automatic responses to abnormal conditions in complex processes, such as in nuclear power plants, and to apparatus and a method for testing such protection systems. More specifically, the invention is directed to voted logic power circuits for such a protection system which can be used with normally energized or normally deenergized protection devices and to a tester which tests each switching component of the power circuit while maintaining the protection function.

Prior Art:

Protection systems for complex processes monitor selected process parameters, such as temperatures, pressures and flows, and the status of various components such as whether a valve is open or closed or whether a pump is on or off, and provide automatic responses to measured values of the parameters and to detected status states of the components which require positive intervention to prevent, or to alleviate the effects of, abnormal process conditions. High reliability is an essential requirement for such a system. In order to enhance reliability, it is common practice to provide redundant sensors for each selected parameter and component status. It is also common practice to vote the responses of the redundant sensors, that is to require that a plurality, but not necessarily all, of the sensors, detect the abnormal condition before action is initiated in order to reduce the probability of a spurious actuation.

A nuclear power plant is one example of a complex process in which such a protection system is employed. The protection system in a nuclear power plant performs a plurality of functions. It can shutdown, or trip, the reactor if conditions warrant, or it can perform a number of engineered safeguard functions, such as opening or closing valves and turning on or off pumps or other components. Typically, the trip function involves deenergizing electromechanical jacks which normally hold control rods in a position withdrawn from the reactor core so that the rods reenter the core and cause it to go subcritical. The engineered safeguard functions may involve either deenergizing a load device which is normally energized or energizing a device which is normally deenergized. In a typical engineered safeguard function system, four redundant sensors are used to detect the selected parameters and/or status conditions. The response of each sensor is compared with a setpoint value to generate a digital signal which is referred to as a partial actuation signal since an indication from more than one sensor is required to actuate the safety component. The four partial actuation signals for each parameter or status condition are all fed to each of two identical, electrically isolated logic trains. Typically, this is accomplished by applying each partial actuation signal to the coil of a relay having one set of contacts in each logic train. Each logic train independently votes the partial actuation signals, such as two out of four, and generates an actuation signal. The two independently generated actuation signals are then applied to a power interface circuit which requires the presence of both actuation signals to actuate the load device, either a normally energized or normally deenergized component, to initiate the engineered safeguard function. Such a two out of two voting power interface can be disabled by a single failure in one of the two channels.

Regulations require that the switching devices comprising the power interface be tested periodically. At present, these tests are performed manually with the plant remaining on line. To avoid disrupting plant operation, special test procedures and circuits have been employed to permit testing without changing the energization status of the actuated device associated with the interface under test.

In the case of a normally energized load which cannot be deenergized while the plant is in operation, the apparatus and method used are as described in U.S. Patent No. 3,967,257. This involves connecting a current monitor in series with the switching device under test and connecting in parallel with that combination, a second switching device which is also equipped with a visual current monitor. To perform the test, the second switching device is first "closed" in order to maintain power to the load. The device under test is then exercised while the corresponding current monitor is observed as an indication of its switching state. Normally, deenergized loads which cannot be energized during testing are generally tested by exercising the switching devices using a current which is of sufficient magnitude to be detectable but which is below the actuation current threshold for the actuated device.

The prior art systems for testing power interfaces utilize feedback signals which indicate the presence or absence of current in the various circuit legs or they generate analog or digital representations of current magnitude. One problem with test schemes which rely on reading current magnitude is that the current varies as a function of power supply voltage. In the case of a nominal 120 volt DC system, a voltage swing of 50 volts may occur between a low battery condition (approximately 100 VDC) and a full battery or charging condition (approximately 150 VDC).

In testing these prior art protection systems, the sensor channels are tested individually one at a time by substituting test signals for the sensor signals. For safeguard functions in which the load can be momentarily actuated without adverse effects on the process, both logic trains are tested simultaneously which also tests the power interface. Where momentary actuation of the load cannot be tolerated, the logic trains are tested one at a time. In order to test the switches in the power interface, the switches are individually switched out of the power interface network and tested by a low impedance test circuit. Thus, the topography of the power interface circuit is changed to effect the test. With such a system then, the status of the components can only be checked by a specific test and there is no indication during operation of whether a component has failed or not.

A primary object of the present invention is to provide a protection system which is not disabled by a single failure even during testing.

The invention also provides a testable voted logic protection system in which the same circuit topography can be used for both normally energized and normally deenergized switches, without interrupting the protection function and without change in circuit topology.

The preferred system is realized by an n out of m voted logic power interface circuit in which m sets of switches are arranged in a plurality of groups of switches with the groups of switches connected in parallel with each other and in series with a voltage source and a load. Each group of switches include a different selection of n switches connected in series, each from a different one of the m sets of switches. The plurality of groups of switches include all possible combinations of m sets taken n at a time such that with at least n out of the m sets of switches actuated the load device is actuated. Each of the switches is shunted by a resistor to provide a leakage path through each group of switches. However, the impedance of the shunt resistors is several magnitudes greater than that of a closed switch so that the leakage current is insufficient to energize the load. Detectors associated with each group of switches, and responsive to changes in impedance in the group, generate output signals indicative of the state of the switches. Preferably, the detectors generate digital signals having a first value when none of the switches are actuated and a second value when at least one switch in the group is actuated.

As used throughout the specification and claims, the term actuated means that the referenced device is in its operated condition. Thus, a normally closed switch is open when actuated, and a normally open switch is closed. Likewise, a normally deenergized load is energized in its actuated state and a normally energized load is deenergized.

In order to provide self-compensation for variations in supply voltage, each group of switches is incorporated into a resistance measuring bridge circuit in which the voltage drop across the resistor shunted switches is compared with a reference voltage. Both of these voltages are proportional to the supply voltage so that reliable indications of switch actuation are generated despite even large fluctuations in supply voltage. Thus, in a wheatstone bridge circuit, the voltage drop across the group of resistor shunted switches forming one leg of the bridge is applied to one input of a comparator and the reference voltage generated by the other side of the bridge is applied to the other comparator input. The three reference resistors in the bridge circuit are selected such that the comparator has two discrete outputs; one when none of the switches are actuated and another when at least one of them is actuated. Preferably, the reference resistors are selected such that the reference voltage developed by the bridge and applied to the comparator is about halfway between the voltage drop across the group of resistor shunted switches when no switches are actuated, and that when at least one switch is actuated, for all supply voltages.

Where the switches are normally closed devices, a bias voltage is added to the reference voltage to assure reliable switching by the comparator.

While suitable for use in other applications, the invention is particularly adapted for use in a protection system for a nuclear power plant where redundant sets of sensors monitor selected reactor parameters and multiple logic trains independently generate a voted logic actuation signal for each set of switches from redundant signals generated by the sensors. A test unit selectively generates test actuation signals and monitors the detectors for preselected patterns of digital signals. By generating fewer actuation signals than are required to actuate the load, the tests can be performed while the protection system remains on line, for both normally energized and normally deenergized loads. Hence, the protection function is not interrupted during test and no changes in circuit topology are required.

The invention in its broad form resides in a process control arrangement a testable protection system using a two out of three voted power circuit, comprising: a load; a voltage source connectable to the load, characterized by three pairs of switches connected in three groups of two switches each with the two switches in each group associated with a different pair of switches and being connected in parallel, and with the three groups of switches being connected in series with each other, and with the load across the voltage source; means for generating three independent actuating signals; means for applying a different one of said actuating signals independently to one of said pairs of switches to actuate the same, and thereby actuate the load device only if at least two out of the three actuating signals are generated; a resistor shunting each group of switches to provide a leakage path between the voltage source and the load device; and a current detector for measuring the current drawn from the voltage source, the impedance of said resistors having impedances several magnitudes larger than the impedance of a closed switch such that the current through said leakage path is insufficient to energize the load but sufficient for the current measuring means to detect whether a switch is actuated, whereby the operation of the switches can be tested without actuating the load device by separately generating one actuating signal at a time.

According to one embodiment of such a protection system, a power circuit for actuating a load in response to any two out of three actuation signals, includes three pairs of switches connected in three groups of two switches each, with the two switches in each group each being associated with a different pair of switches and being connected in parallel. The three groups of switches are connected in series with each other and with the load across a voltage source. One of the actuation signals actuates each of the pairs of switches such that in the presence of any two actuation signals the load is actuated. The same circuit topography is used whether the load is a normally energized or normally deenergized device. For the normally deenergized device, the switches are normally open and are closed when actuated. Conversely, normally closed switches are used when the load is normally energized. Thus, for the normally energized load, the load is actuated by disconnecting it from the voltage source and the normally deenergized load is actuated by connecting it to the voltage source.

As described herein, the power circuit is tested by shunting each group of switches with a resistor such that together the resistors form a leakage path through the network of switches. The value of the resistors is selected to be several magnitudes larger than that of a closed switch and such that the leakage current is insufficient to energize the load but sufficient that it can be detected by a leakage current detector measuring the current flowing to the load. The power circuit is tested by generating one actuation signal at a time to actuate the associated pair of switches, one in each of two different groups of switches. The increase in current effected by the closing of normally open switches, or the decrease in current resulting from the opening of normally closed switches, is detected by the current detector. If one switch controlled by the actuation signal responds, but the other does not, the change in current is not as great and this also is detected. The power circuit remains operational while the test is being conducted and since the load will be actuated upon the generation of either of the remaining actuation signals, the system is not subject to any single failure.

Generation of the actuation signals and monitoring of the detected current can be placed under the control of an automatic tester. In addition, by monitoring the current, failure of any of the switches either during an actuation or a quiescent period can be detected at the time it occurs rather than waiting for a conventional system test.

Generally, the same basic configuration and method can be used for testing any power circuit in which the load is to be actuated by n out of m actuation signals. In such a power circuit, m sets of switches are arranged in a plurality of groups of switches connected in series with the load across the voltage source. Each group includes n switches connected in parallel, with each of the n switches in each group associated with a different one of said sets of switches. The number of groups of switches required is a function of the number of possible different combinations of switches taken from m sets n at a time. Thus, with m actuation signals each actuating one of the sets of switches, the load is actuated when n out of the m actuation signals are generated. As in the case of the two out of three logic discussed above, the load may be either normally energized or normally deenergized by utilizing normally closed or normally open switches, respectively. Each of the plurality of serially connected groups of switches is shunted by a resistor having an impedance which is several times that of a closed switch to form through the switching network a leakage path in which the current is insufficient to energize the load but large enough to be detected by the current detector. As the numbers m and n become larger, the relative effect of the failure of a single switch on the current becomes smaller and requires more sensitive equipment to detect.

When applied to a protection system for a nuclear reactor in which redundant sensors for selected parameters generate partial actuation signals which are all applied to three logic trains which in turn, each generate an actuation signal based upon a selected voting logic, the two out of three voted power circuit of this invention, with the testing feature, provides a system which can be monitored continuously for switch failure, can be tested without changing circuit topography, is not subject to single failure even during testing and can be used with either normally energized or normally deenergized loads.

A more detailed understanding of the invention can be had from the following description of a preferred embodiment, given by way of example and to be read in conjunction with the accompanying drawing wherein:

Figure 1 is a schematic diagram of a protection system for a nuclear power plant incorporating the present invention which utilizes a normally deenergized load device;

Figure 2 is a schematic diagram of a power of the protection system of Figure 1 adapted for use with a normally energized load device;

Figure 3 is a schematic diagram of a two out of two voting power interface circuit for a normally deenergized load device incorporating the testing feature of the invention;

Figure 4 is a schematic diagram of a two out of two voting power interface circuit for a normally energized load device incorporating the testing feature of the invention;

Figure 5 is a schematic diagram of a protection system for a nuclear power plant incorporating the present invention;

Figure 6 is a schematic diagram of a portion of the protection system in Figure 5 which is modified in accordance with the invention to provide self-compensation for variations in supply voltage; and

Figure 7 is a schematic diagram of the portion of the protection system of Figure 6 adapted for the use of solid state switching devices.

## DESCRIPTION OF THE PREFERRED EMBODIMENTS

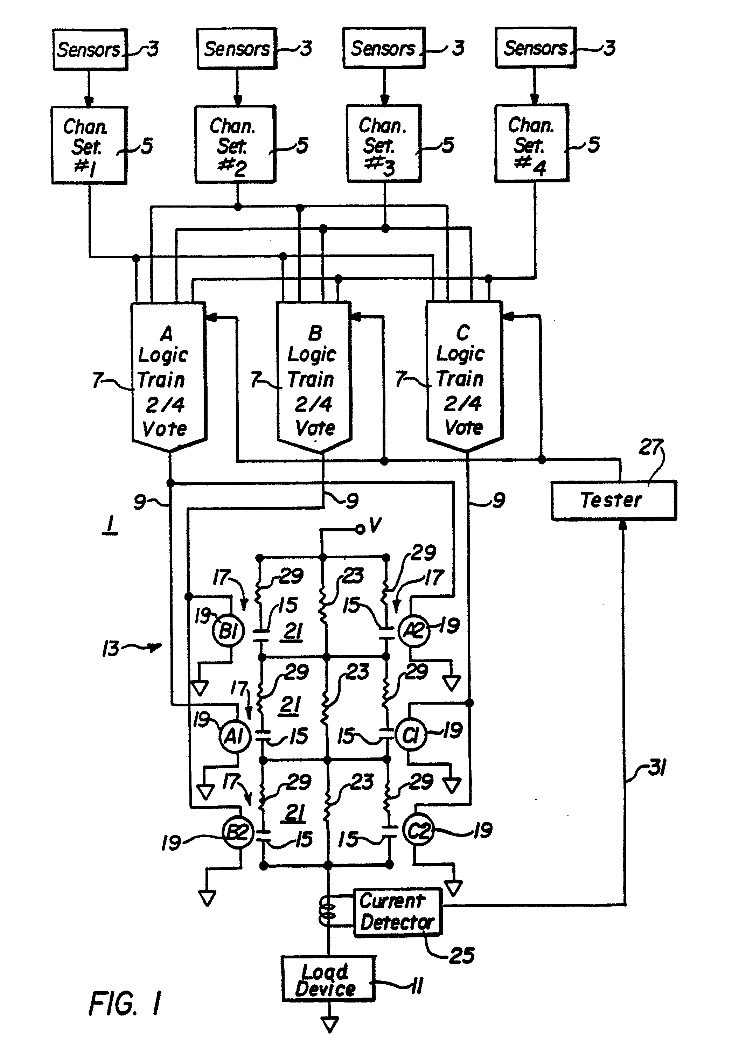

The invention will be described as applied to the protection system for a nuclear power plant although it could also be incorporated into the protection system for many other types of complex processes. As shown in Figure 1, the exemplary system 1 employs four redundant sets of sensors 3 to monitor selected plant parameters such as pressure, temperature, flow, radiation level, et cetera, and/or the status of various components, such as whether a valve is open or closed or whether a pump is running or not. Where such a system is used for a particular safeguard function, the sensors 3 may monitor only one or a plurality of plant parameters or conditions. The signals generated by each set of sensors 3 are applied to separate channel sets 5, numbered 1 through 4 in Figure 1, where the detected values of the sensor signals are analyzed for an indication of an abnormal condition by comparing them with selected setpoint values. In some instances, the values of measured parameters are used to calculate other parameters which are then compared with limiting values for an indication of an abnormal condition as is well-known in the field of control system engineering. Each channel set generates a digital output signal which indicates whether or not the sensors in that channel set are sensing conditions which warrant actuation of the associated safeguard function. Since confirmation by more than one channel set is required to initiate the safeguard function, the digital signals are referred to as "partial actuation signals".

The partial actuation signals from each of the channel sets 5 are each applied to three independent logic trains 7 labeled A, B and C in Figure 1. In order to provide separation between the redundant partial actuation signals, they are electrically isolated from one another such as by applying each of them to the coil of a separate relay in each logic train as is now common practice. The coil to contact separation of these relays provides the electrical isolation between the actuation signals and between the logic trains. Isolation could also be provided for instance, by optical isolators where solid state switches are used in place of relays.

The logic trains 7 independently vote the partial trip signals received from the four channel sets 5 and generate an actuation signal on their associated output lines 9 when the prescribed number of partial trip signals is detected. Typically, two out of four voting logic is employed by these logic trains. That is, two out of the four channel sets must be generating a partial actuation signal in order for the logic train to generate an actuation signal. Such a scheme allows for failures which preclude the generation of a partial actuation signal by two of the channel sets, while reducing the likelihood of a spurious trip which could occur if only one partial trip signal was required to generate an actuation signal. In the normal course of events, all four channel sets would generate partial actuation signals upon the occurrence of the abnormal condition, and all three logic trains 7 would generate an actuation signal. Of course, voting strategies other than two of four could be employed by the logic trains 7.

The actuation signals on the leads 9 are utilized to control the energization of a load device 11 by a voltage source V through a power interface identified generally in Figure 1 by the reference character 13. The load device may be any type of electrically operated device which effects an automatic response to the detection of the associated abnormal condition. Such a device could be for example, a pump, an electrically controlled valve, a heater, a circuit breaker or any motor driven device. In the system of Figure 1, the load device would be a normally deenergized device, but as will be seen, the invention can also be used with normally energized load devices also.

The power interface 13 includes a network of switches connected in series with the load device 11 across the voltage source V. In the circuit of Figure 1, the switches are the normally open contacts 15 of relays 17 individually identified as A1, A2, B1, B2, C1 and C2. The coils 19 of the two relays 17 are connected to the output line 9 from each logic train 7. The contacts of these coils are connected in three groups 21 of two contacts each with the two contacts in each group connected in parallel and the groups connected in series. The two contacts in each group are associated with relays energized by different logic trains. Thus, the first group includes the make contacts of relays B1 and A2; the second, contacts of relays A1 and C1; and the third contacts of relays B2 and C2. Hence, it will be seen from Figure 1, that for any combination of actuation signals generated on the lines 9 by two out of three of the logic trains 7, contacts will be closed in the power interface 13 to actuate the load device 11 by completing a circuit between the voltage source V and the device. With this power interface, protection against spurious actuations is provided by requiring confirmation of the abnormal condition by at least two of the logic trains, yet a failure in any one logic channel will not disable the system.

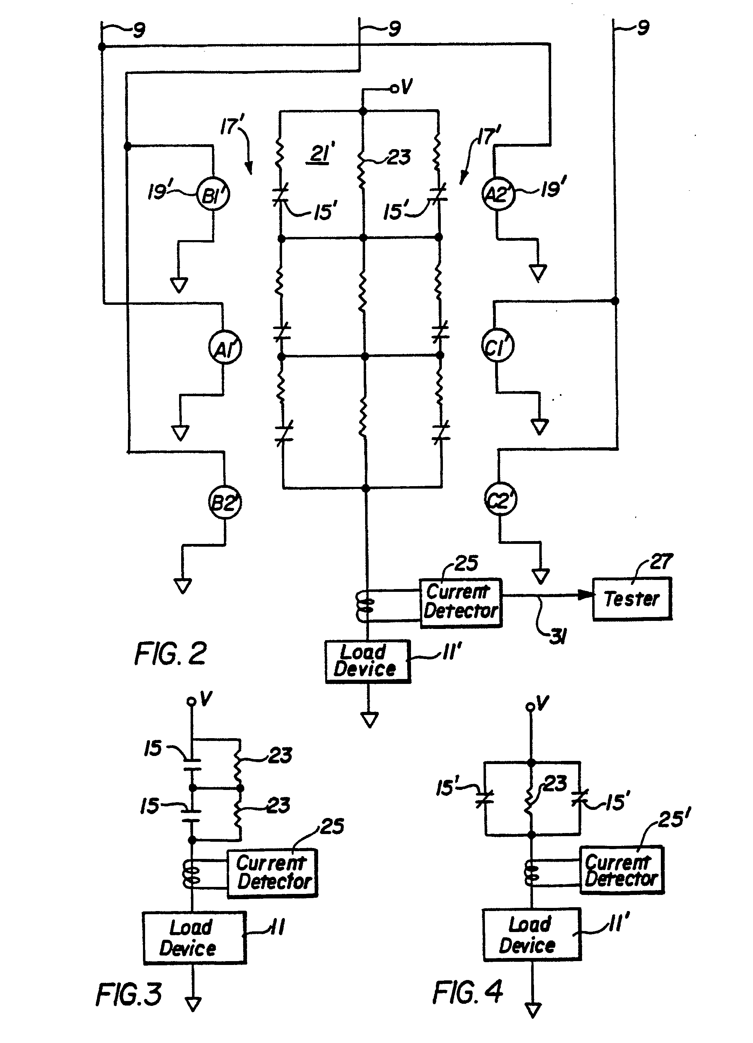

Another advantage of the invention is that the same basic arrangement of the power interface can be used for normally energized as well as normally deenergized load devices. Thus, as shown in Figure 2, the normally closed break contacts 15' of two relays 17', the coils 19' of which are connected to each logic train actuation line 9, are arranged in three series connected groups of two contacts each in parallel. In this circuit, a path through the switching network 13' remains complete unless actuation signals are generated on two out of three of the lines 9. In this arrangement, the load device is actuated by interrupting the power to the load device 11'. Again, spurious actuations are reduced by requiring confirmation of two out of three of the logic trains and the system is not disabled by a single failure.

The present invention includes a unique arrangement for testing protection systems such as those disclosed in Figures 1 and 2. As shown in these figures, each group 21 or 21' of relay contacts is shunted by a resistor 23 which, because the three groups of relay contacts are connected in series, form a leakage path through the network 13 or 13'. A current detector 25 measures the current drawn from the voltage source by the load 11 or 11' and the switching network 13 or 13' including the leakage path through the resistors 23. The current detected by the current detector is applied to a tester 27 which analyzes the detected current based upon test inputs to determine the condition of the tested components.

The resistance of the resistors 23, is sufficiently large that the leakage current through them is insufficient to energize the load device 11, 11' yet is large enough to be detected by the current detector 25. The value of these resistors 23 is also several magnitudes larger than that of the contact resistance of the contacts 15, 15' as represented by the resistances 29, 29' shown in series with the contacts, such that the current through a closed set of contacts 15, 15' is measurably larger than that through the associated shunt resistor 23.

With this arrangement, the power interface can be automatically tested without actuating the load device, whether it is normally energized or deenergized, and without changing the circuit topography, while continuously maintaining the protection function. Referring to Figure 1, the tester 27 sends signals to one of the logic trains 7 at a time disconnecting the inputs from the channel sets 5 and substituting test signals. Various combinations of these test signals can be generated by the tester to test the logic train. Certain combinations of the test signals will generate an actuation signal on the associated actuation line 9 thereby energizing the associated relays. For instance, during testing of logic train A, relays A1 and A2 will be energized. The closing of the normally open contacts 15 of these relays will insert their contact resistance in parallel with the resistances 23 shunting the first two groups of contacts in the power interface 13, thereby lowering the total resistance in series with the load. This will result in an increase in current to the load which is detected by the current detector 25 and transmitted to the tester over line 31. Since neither of the contacts 15 in the lowest group 21 of contacts is closed at this time, all of the current must flow through the associated resistor 23 so that even though the current increases, it is not high enough to actuate the load device 11. It will be appreciated that if one of the relays A1 or A2 should fail and its contacts do not close during the test, the current will increase over that with no logic trains actuated, but it will be less than if both relays operated properly since all of the current must flow through two of the resistors 23. Thus, the test sequence tests the operation of each of the relays in the power interface 13.

The other logic trains 7 are tested sequentially in a similar manner. During testing, the voting logic of the power interface 13 is transformed from two out of three logic to one out of two. That is, with one logic train generating an actuation signal induced by the tester, only one of the other logic trains need detect an abnormal condition for the load device to be actuated. For instance, with channel A under test, an actuation signal from either channel B or C will complete a low resistance path through the power interface to energize the load device 11. This transformation is achieved without any change in circuit topography. It also assures that the power interface is not disabled by a single failure in the remaining active channels during testing as in the prior art.

Testing of the circuit of Figure 2, where the load device is normally energized, is carried out in a similar manner to that described in connection with Figure 1. In this instance, actuation of relays during the test will lower the current. Again, failure of one of the relays to actuate will be detected by the tester, this time because the current will not be decreased as much as it should have had both relays operated as they should.

As an example of the operation of the circuits of Figures 1 and 2, the following table sets forth the currents that will be detected under the specified conditions where the value of the resistors 23 is 10K ohms, the resistance 29, 29' of the contacts 15, 15' is 1 ohm, the resistance of the load device 11, 11' is 500 ohms and the voltage V is 125 volts d-c.

| 2/3 VOTER SWITCHING STATE | NORMALLY DEENERGIZED LOAD | | NORMALLY ENERGIZED LOAD | |
|---|---|---|---|---|
| | R | I[mA] | R | I[mA] |
| 0/3 Normal | 30KΩ All Open | 4mA | 1.5Ω All Closed | 249.25 |
| 1/3 Test Position | 10KΩ | 12mA | 2.5Ω | 248.75 |
| 2/3 Faulted Actuation | 2.5Ω | 248mA | 10KΩ | 12mA |
| 3/3 Normal Actuation | 1.5Ω | 249mA | 30KΩ | 4mA |
| Single Fault | 20KΩ One Switch Closed | 6mA | 2Ω One Switch Open | 249.00mA |

As can be been from this table, the invention provides the capability of monitoring the performance of each logic train 7 and each switch 17 in the power interface network 13, 13'. It not only provides the capability of specifically testing each of the components but can also be used to provide on-line continuous monitoring of these components. For instance, when the plant is operating normally, a failure in a logic train which erroneously generates a single actuation signal on one of the actuation lines 9 would be detected by a change in load current. Similarly, a failure in any one of the switches 15, 15' in the power interface 13, 13' would also be detected by a change in load current. Even during an actuation of the load device by two out of three rather than all three logic trains would be detected.

The arrangement for testing the power interface is not confined to testing a two out of three voting logic network. For example, it can also be used to test and monitor the prior art a two out of two voting logic power interface for normally deenergized and normally energized loads as shown in Figures 3 and 4, respectively. In fact, it can be used for any power interface network having m sets of switches where the switches are arranged in a plurality of groups of switches connected in series with the load across the voltage source. Each group of switches comprises a different selection of n switches each from a different set of switches all connected in parallel such that with at least n sets of switches actuated, the load is actuated. A resistor, such a resistor 23, shunts each of the m groups of switches to provide the leakage path through the network. Applying this general description to the circuit of Figure 1 where m = 3 and n = 2, it can be seen that there are three groups of switches connected in series and that each group includes a different selection of two switches each from a different set of switches connected in parallel so that with two out of three of the three sets of switches actuated, the load, whether normally energized or deenergized, is actuated.

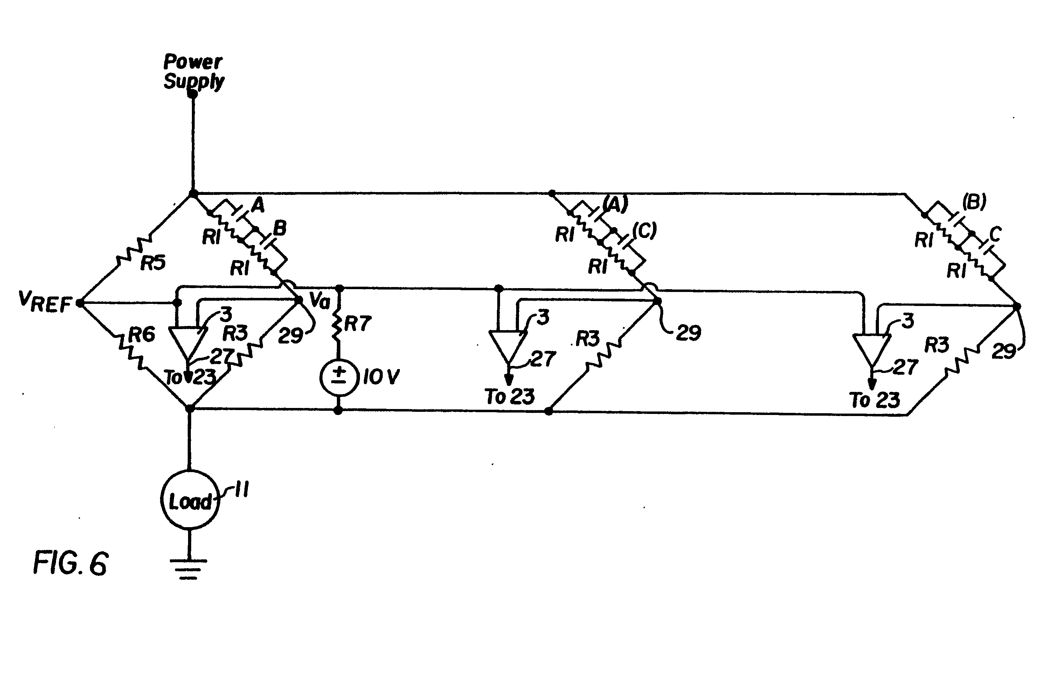

The system will further be described with reference to Figures 5 to 7 as applied to the protection system for a nuclear power plant, although it could also be incorporated into the power interface systems for many other types of complex processes. As shown in Figure 5, the exemplary system 1 employs four redundant sets of sensors 3 to monitor selected plant parameters such as pressure, temperature, flow, radiation level, et cetera, and/or the status of various components, such as whether a valve is open or closed or whether a pump is running or not. Where such a system is used for a particular safeguard function, the sensors 3 may monitor only one or a plurality of plant parameters or conditions. The signals generated by each set of sensors 3 are applied to separate channel sets 5, numbered 1 through 4 in Figure 4, where the detected values of the sensor signals are analyzed for an indication of an abnormal condition by comparing them with selected setpoint values. In some instances, the values of measured parameters are used to calculate other parameters which are then compared with limiting values for an indication of an abnormal condition as is well-known in the field of control system engineering. Each channel set generates a digital output signal which indicates whether or not the sensors in that channel set are sensing conditions which warrant actuation of the associated safeguard function. Since confirmation by more than one channel

7

set is required to initiate the safeguard function, the digital signals are referred to as "partial actuation signals".

The partial actuation signals from each of the channel sets 5 are each applied to three independent logic trains 7 labeled A, B and C in Figure 5. In order to provide separation between the redundant partial actuation signals, they are electrically isolated from one another such as by applying each of them to the coil of a separate relay in each logic train as is now common practice. The coil to contact separation of these relays provides the electrical isolation between the actuation signals and between the logic trains. Isolation could also be provided for instance, by optical isolators where solid state switches are used in place of relays.

The logic trains 7 which may preferably comprise microcomputer systems, independently vote the partial trip signals received from the four channel sets 5 and generate an actuation signal a, b or c on their associated output lines 9 when the prescribed number of partial trip signals is detected. Typically, two out of four voting logic is employed by these logic trains. That is, two out of the four channel sets must be generating a partial actuation signal in order for the logic train to generate an actuation signal. Such a scheme allows for failures which preclude the generation of a partial actuation signal by two of the channel sets, while reducing the likelihood of a spurious trip which could occur if only one partial trip signal was required to generate an actuation signal. In the normal course of events, all four channel sets would generate partial actuation signals upon the occurrence of the abnormal condition, and all three logic trains 7 would generate an actuation signal. Of course, voting strategies other than two out of four could be employed by the logic trains 7.

The actuation signals on the leads 9 are utilized to control the energization of a load device 11 by a voltage source V through a power interface identified generally in Figure 1 by the reference character 13. The load device 11 may be any type of electrically operated device which effects an automatic response to the detection of the associated abnormal condition. Such a device could be for example, a pump, an electrically controlled valve, a heater, a circuit breaker or any motor driven device. In the system of Figure 5, the load device would be a normally deenergized device, but as will be seen, the invention can also be used with normally energized load devices also.

The power interface 13 includes a network of switches connected in series with the load device 11 across the voltage source V. In the circuit of Figure 5, the switches are the normally open contacts 15 of relays A, (A), B, (B), C and (C). The coils 17 of two relays are connected to the output line 9 from each logic train 7. The contacts of these coils are connected in three groups 19 of two contacts each with the two contacts in each group connected in series and the groups connected in parallel. The two contacts in each group are associated with relays energized by different logic trains. Thus, the first group includes the make contacts of relays A and B; the second, contacts of relays (A) and (C); and the third, contacts of relays (B) and C. Hence, it will be seen from Figure 5, that for any combination of actuation signals generated on the lines 9 by two out of three of the logic trains 7, contacts will be closed in the power interface 13 to actuate the load device 11 by completing a circuit between the voltage source V and the device. With this power interface, protection against spurious actuations is provided by requiring confirmation of the abnormal condition by at least two of the logic trains, yet a failure in any one logic channel will not disable the system. Alternatively, one relay with two sets of contacts could be used instead of the two separate relays, such as A and (A) connected to each logic train.

In order to provide an on-line test capability of the power interface 13, each of the switches 15 is shunted by a resistor R1, and a current monitor 21 is connected in each branch of the switching network. A microprocessor based tester 23 generates test signals which are applied through lines 25 to the logic trains to cause the latter to selectively generate the actuation signals a, b and c. The current registered by each of the current monitors 21 is feedback to the tester 23 over lines 27.

The resistors R1 provide a leakage path through each group 19 of switches in the power interface 13, however, they are selected to have an impedance which is several magnitudes greater than that of a closed switch so that the total leakage current is insufficient to energize the load 11. By way of example, for a load device 11 with an impedance of 120 ohms, and a power supply voltage of 120 volts, a suitable value for the resistors R1 is 30,000 ohms. Under these conditions, if both switches in one leg of the switching network are open, the corresponding current monitor 21 will register a current of about 2 milliamps and the load will not be energized. This is defined as the "OFF" state. If just one of the switches is closed, the current will be about 4 milliamps and this is defined as the "ON" state for the interface employing make contacts although the load will still be deenergized at this current level. When both switches in a group 19 are closed, the current is about 1 amp and the load is energized. This is also defined as an "ON" state.

While a simple "ON" indication does not indicate which of the two switches in a group is closed, the operability of each device can be checked by forcing the inputs using the tester 23 and monitoring the "OFF"/"ON" status of each branch in the switching network. Thus, the tester 23 generates a pattern of test signals and compares the results reported back by the current monitors 21 with a stored expected pattern of responses. Any deviation from the expected responses is identified as an indication of a malfunction.

Table I below illustrates the test sequence for the power interface Circuit of Figure 1 for the normally deenergized load shown:

TABLE I

| NORMALLY DEENERGIZED LOAD | | | | |
|---|---|---|---|---|
| Step | Operation | $I_1$ | $I_2$ | $I_3$ |
| 1. | No actuation signal | OFF | OFF | OFF |
| 2. | Actuation signal a | ON | ON | OFF |
| 3. | Actuation signal b | ON | OFF | ON |
| 4. | Actuation signal c | OFF | ON | ON |

The circuit of Figure 5 can also be used with normally energized loads in which case the switches 15 would all comprise break contacts of the associated relays, and the load device 11 would be actuated by interruption of the energizing current in response to generation of two out of three of the actuation signals a, b and c. In this instance, the "OFF" State is defined as a condition in which at least one of the break contacts in a group is open. The power interface circuit 13 utilizing break contacts would be tested in the same manner as discussed above through generation of a pattern of actuation signals under the direction of the tester 23. Table II below illustrates the test sequence for the circuit of Figure 1 with a normally energized load:

TABLE II

| NORMALLY ENERGIZED LOAD | | | | |
|---|---|---|---|---|
| Step | Operation | $I_1$ | $I_2$ | $I_3$ |
| 1. | No actuation signals | ON | ON | ON |
| 2. | Actuation signal a | OFF | OFF | ON |
| 3. | Actuation signal b | OFF | ON | OFF |
| 4. | Actuation signal c | ON | OFF | OFF |

Since the invention does not require any change in circuit topology for the test sequence, and hence, the resistors R1 and the current monitors 21 remain effective during normal operation, the system can be continuously monitored without degrading the protection function. Accordingly, all of the current monitors should be "OFF" for a normally energized load and should be in an "ON" state for a normally deenergized load, under normal operating conditions when no test is being conducted. Conversely, they should all be in the opposite states when conditions in the reactor warrant actuation of the protection function. Any deviation from these all "ON" or "OFF" states indicates a malfunction in the system, and through continuous monitoring could be detected when they occur without waiting for a test sequence.

In order to overcome the effects of large fluctuations in the magnitude of the voltage of the power source V which were mentioned above, the groups 19 of switches 15 are incorporated into a series of parallel resistance bridges as shown in Figure 6. The resistor shunted switches 15 of each group form one leg of a wheatstone bridge circuit and are connected in series with a reference resistor R3, forming a second leg, at a first node 29. Reference resistors R5 and R6 forming the remaining two legs of the bridge circuit generate a reference voltage, Vref, at a second node 31. The legs formed by resistors R5 and R6 are shared by each of the three bridge circuits so that a common Vref is generated. Each bridge is spanned between nodes 29 and 31 by a comparator 33 which compares the voltage drop generated by the associated group of resistor shunted switches 15 with Vref. The comparator 33 generates a digital output which assumes an "ON" state when the voltage at the first node 29 exceeds Vref indicating that at least one of the normally open resistor shunted switches is closed, and assumes an "OFF" state, indicating that both switches are open, when Vref exceeds the voltage at node 29. Reference to Tables I and II will confirm that each switching state that the interface is capable of assuming can be verified by interrogating the digital status of each comparator 33 in light of the inputs imposed by tester 23.

The key advantage of the bridge circuits is that a change in power supply voltage, which of course, will produce a change in the voltage at node 29, is compensated for by a similar change in Vref. For example, if we select R1 = 30k ohms, R3 = 2 ohms, R5 = 450k ohms, and R6 = 20 ohms, a power supply voltage of 120 volts will result in Vref = 5.33 millivolts and:

Va = 4 millivolts (both switches open)

Va = 8 millivolts (one switch open).

Thus, it can be seen that the values of R5 and R6 have been selected such that Vref lies about midway between the value of Va, the voltage at node 29, with both switches open and the value of Va with one switch closed. If the supply drops to 100 volts, Vref will drop to 4.4 millivolts and:

Va = 3.33 millivolts (both switches open)

Va = 6.66 millivolts (one switch open).

Likewise, if the supply voltage rises to 150 volts, Vref = 6.66 millivolts and:

Va = 5 millivolts (both switches open)

Va = 10 millivolts (one switch open).

It should be noted that over this wide range of supply voltages, the comparator trip point, Vref, remains about midway between the two possible values of Va, and that those two values remain distinct.

A further advantage of the invention is that the feedback signals on lines 27 consist of 3 single bit signals which directly specify the switching state of the interface rather than current magnitudes from which the switching state is deduced.

The above analysis applies to testing an interface circuit with a normally open output. For a normally closed type of output, the comparator reference would be almost zero since most of the voltage drop would appear across the load 11 with the resistors R1 shunted by closed switches. As shown in Figure 6, a 10 volt supply and resistor R7, chosen as 200 K ohms for this example, add a small bias, 1 millivolt, to the reference voltage to allow the comparator to function when the voltage across the bridge is small due to one of the legs being energized. The voltage Va applied to the comparators 33 is 0.66 volt when all three groups 19 of switches 15 are conducting. When a normally closed switch is open in two groups of switches and only one group of switches conducts, as would be the case during testing, the voltage Va applied by the two non-conducting groups of switches to the associated comparator 33 would be zero volts and the voltage applied to the comparator by the conducting groups of switches would be about 2 volts. By adding the 1 millivolt bias to Vref, a definite difference is generated between Vref and Va for the conducting group of switches, and again, a reliable single bit digital signal is generated despite variations in supply voltage.

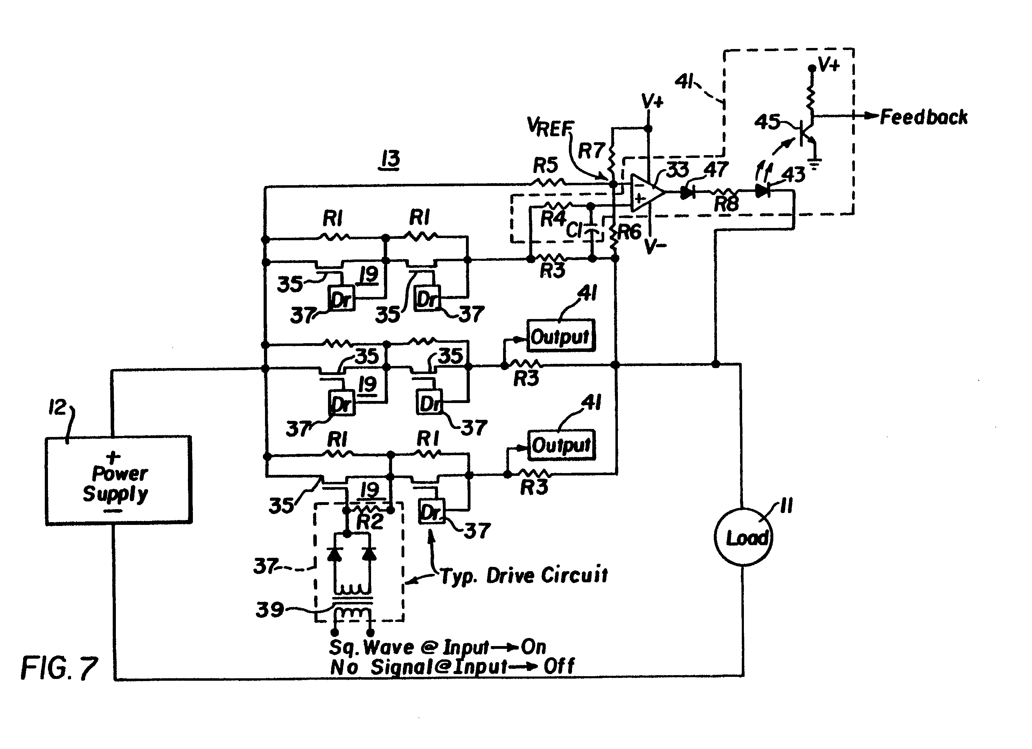

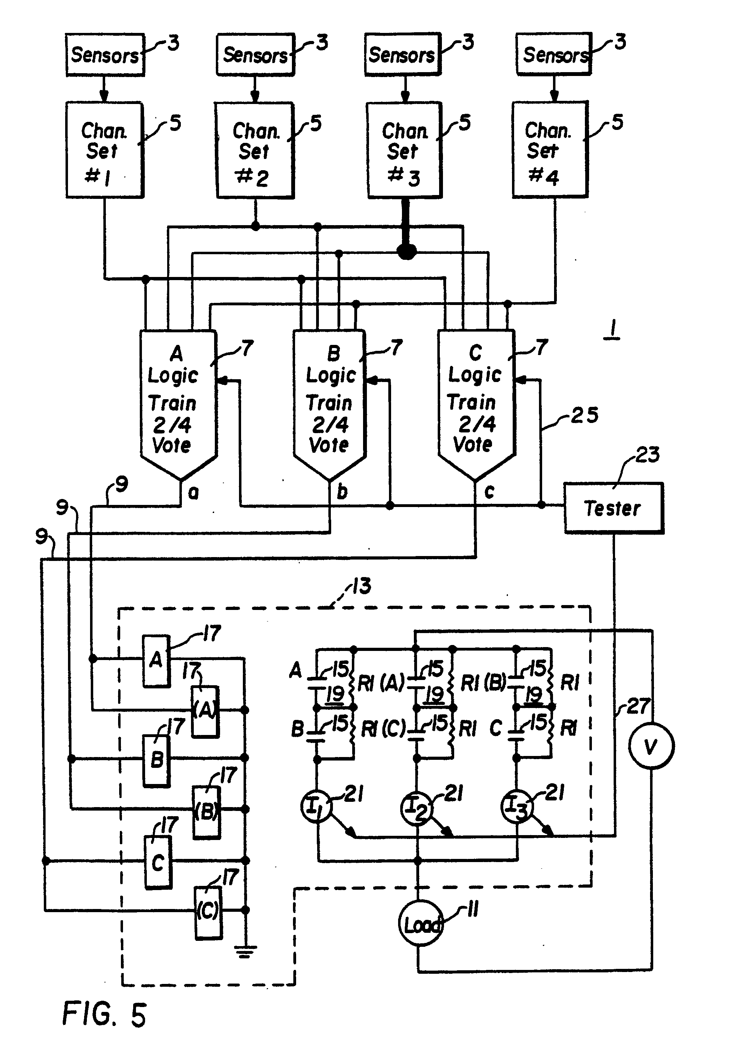

Figure 7 illustrates a practical circuit for implementing the invention for d-c power interfaces utilizing solid state switching devices. In place of the relays, power FETs 35 are utilized as the switching devices between the load 11 and power supply 12. The FETs are switched by square wave actuation signals a, b and c generated by the logic trains 7 through conventional drive circuits 37 which convert the a-c logic signal to a d-c control signal. The transformers 39 in the drive circuit provide isolation between the logic trains 7 and the power interface 13.

As in the case of the power interface of Figure 2, the FETs of Figure 7 are arranged in resistance measuring bridge circuits. The output circuit 41 for each group of switches includes the comparator 33 which compares Vref generated by the resistors R5 and R6 with the voltage at node 29. The voltage at node 29 is applied to the positive input of the comparator 33 through an input resistor R4 with the switching noise filtered out by a capacitor C1. An LED 43 is energized by the digital output of the comparator 33 when the voltage Va exceeds Vref. Radiation from the LED 43 turns ON a phototransistor 45 to provide an isolated output for the comparator. A diode 47 prevents reverse biasing of LED 43. Similar isolated, single bit digital output circuits 41 are provided for each of the other groups 19 of switches.

Each of the FETs 35 is turned ON when a square wave signal is applied to the drive circuit 37. Thus, for a normally deenergized load 11, no signal is applied to the drive circuits under normal conditions so that the FETs are OFF. Under these conditions, the voltage, Va, at node 29 for each of the groups of switches is lower than Vref so that the output of the comparator 33 is low, the LED is OFF and therefore the phototransistor does not conduct. As a result, the digital output FEEDBACK signal which is returned to the tester over line 27 is high. When the tester induces a logic train 7 to generate a square wave actuation signal, one of the FETs in each of two of the groups 19 of switches is turned ON. This raises the voltage at node 29 above Vref for those groups of switches, causing the comparators to turn ON the associated LEDs, which in turn, turn on the phototransistors to cause their FEEDBACK signals to go low.

Conversely, for a normally energized load, a square wave signal is normally applied to the drive circuits of the FETs to keep them turned ON. This results in the voltage at node 29 being higher than Vref and the phototransistor conducts to pull the output down. Thus, under normal conditions, a low level FEEDBACK signal is returned over line 27 to the tester. This is the opposite of the case with the normally deenergized load discussed above. Generation of an actuation signal by a logic train 7, either on its own or under the direction of the tester, removes the square wave signal from the appropriate FET drive circuit which turns those switches OFF. The voltage applied to the associated comparators will then be lower than Vref so that these LEDs will be OFF. Since this will turn OFF the associated phototransistors, their FEEDBACK signals will be high.

While the invention has been described using relays as the switches, other switching devices could also be used, such as triacs, SCRs, or power MOSFETs. In the case of these solid state devices, the resistance 29, 29' represents the dynamic resistance of the device. These solid state switches may be isolated to maintain separation of the channels by for instance, opto-isolators or other suitable protection grade isolation devices.

While specific embodiments of the invention have been described in detail, it will be appreciated by those skilled in the art that various modifications and alternatives to those details could be developed in light of the overall teachings of the disclosure. Accordingly, the particular arrangements disclosed are meant to be illustrative only and not limiting as to the scope of the invention which is to be given the full breadth of the appended claims and any and all equivalents thereof.

## Claims

1. A testable, two out of three voted logic power interface circuit for a process control arrangement, comprising:

   a load (11);

   a voltage source (2) connectable to the load (11); and

   a current detector (25) for measuring the current drawn from the voltage source (2);

   three pairs of switches (15,17) connected in three groups of two switches each, with the two switches in each group being connected in parallel and associated with a different pair of switches, the three groups of switches being connected in series with each other, and with the load (11) across the voltage source (2);

   means (5) for generating three independent actuating signals;

   means for applying a different one of said actuating signals independently to one of said pairs (15,17) of switches to actuate the same, and thereby actuate the load device (11) only if at least two out of the three actuating signals are generated; the circuit characterized by

   a shunting resistor (23) for each group of switches to provide a leakage path between the voltage source (2) and the load device (11) through each group of switches;

   the impedance of said resistors (23) being several magnitudes larger

   than the impedance of a closed switch such that the current through said leakage path is insufficient to actuate the load (11) but sufficient for the current detector (25) to detect whether a switch is actuated, whereby the operation of the switches can be tested without actuating the load device (11) by separately generating one actuating signal at a time.

2. The power circuit of claim 1 wherein said load (11) is a normally energized device and wherein the switches (15) are normally closed devices which are open when actuated by the associated actuation signal, such that the load (11) is normally energized and is deenergized by the generation of at least two out of the three actuation signals.

3. The power circuit of claim 1 wherein said switches (15) are normally open devices which are closed when actuated by the associated actuation signal, such that the load (11) is normally deenergized but is energized by the generation of at least two out of the three actuation signals.

4. The power circuit of claim 1 wherein the detector (25) generates a one bit digital signal having one value when not of the switches (15,17) in the group is actuated and a second value when at least one switch (15,17) in the group is actuated.

5. The power circuit of claim 4 including bridge circuit means for each group (19) of switches (15) connected in series with the load (11) and comprising four legs, a first leg comprising said group of resistor shunted switches (15), a second leg comprising a first reference resistor (R3) connected in series with the first leg at a first common node (29), and a third and a fourth leg comprising second and third reference resistors (R5, R6) respectively connected in series at a second common node (31), said series connected first and second legs being connected in parallel with the series connected third and fourth legs and wherein the detector comprises a comparator (33) connected across said first and second nodes (21,31), the values of said first, second and third reference resistors (R3, R5, R6) being selected relative to the resistors R1 shunting said switches such that with none of said switches actuated the comparator (33) has a first output and with at least one of said switches actuated the comparator (33) has a second output, despite variations in the voltage output of the electric power source.

6. The power interface circuit of claim 5 wherein a common third and a common fourth leg are shared by the bridge circuits associated with each of the groups (19) of switches.

7. A method of testing a power circuit for a protection system in a complex process control system without interrupting the protection function where the power circuit includes m sets of m-1 switches arranged in a plurality of m groups of switches with each group of switches connected in series with the other groups and with a load across a voltage source, each group of switches comprising a different selection of m-1 switches connected in parallel each from a different one of said m sets of switches, such that with at least 2 out of said m sets of switches actuated the load is actuated, said method comprising the steps of:

shunting each of said groups of switches with a resistor to form a leakage path through said arrangement of switches, the resistance of said resistors being several magnitudes larger than that of a closed switch, such that the current through the leakage path is insufficient to actuate the load but sufficient to be measurably changed by actuation of a switch;

actuating one of said m sets of switches; and

measuring the effect such actuation has on the current drawn from the voltage source.

8. The method of claim 7 including determining the current drawn from the voltage source for predetermined patterns of actuation of said switches during operation of said protection system, monitoring the current drawn from the voltage source, and comparing the monitored current with the current determined for the existing pattern of actuation of said switches to determine whether all of the switches have been actuated in accordance with the existing pattern of actuation.

**Revendications**

1. Circuit testable d'interface de puissance à logique de type à majorité deux-sur-trois pour un dispositif de commande de processus, comprenant:

une charge (11);

une source (2) de tension pouvant être reliée à la charge (11) et un détecteur (25) de courant pour mesurer le courant pris à la source (2) de tension;

trois paires de contacts (15, 17) montés en trois groupes de deux contacts chacun, les deux contacts de chaque groupe étant montés en parallèle et coopérant avec une paire de contacts différente, les trois groupes de contacts étant montés en série les uns avec les autres et avec la charge (11) à la source (2) de tension;

un moyen (5) pour produire trois signaux d'excitation indépendants;

un moyen pour appliquer indépendamment un signal différent parmi lesdits signaux d'excitation à l'une desdites paires (15, 17) de contacts pour exciter ces derniers, et exciter de ce fait le dispositif de charge (11) uniquement si au moins deux des trois signaux d'excitation sont produits,

le circuit étant caractérisé par

une résistance (23) de dérivation pour chaque groupe de contacts afin de réaliser un parcours de fuite entre la source (2) de tension et le dispositif de charge (11) à travers chaque groupe de contacts, l'impédance desdites résistances (23) étant supérieure de plusieurs ordres de grandeur à l'impédance d'un contact fermé de telle sorte que le courant passant par ledit parcours de fuite est insuffisant pour exciter la charge (11) mais est suffisant pour que le détecteur (25) de courant détermine si un contact est excité, grâce à quoi le fonctionnement des contacts peut être testé sans exciter le dispositif de charge (11) en produisant séparément un seul signal d'excitation à la fois.

2. Circuit de puissance selon la revendication 1, dans lequel ladite charge (11) est un dispositif normalement sous tension, et dans lequel les contacts (15) sont des dispositifs normalement fermés qui s'ouvrent lorsqu'ils sont excités par le signal d'excitation correspondant, de telle sorte que la charge (11) est normalement mise sous et hors tension par la production d'au moins deux des trcis signaux d'actionnement.

3. Circuit de puissance selon la revendication 1, dans lequel lesdits contacts (15) sont des dispositifs normalement ouverts qui se ferment lorsqu'ils sont excités par le signal d'actionnement correspondant, de telle façon que la charge (11) est normalement hors tension, mais est mise sous tension par la production d'au moins deux des trois signaux d'excitation.

4. Circuit de puissance selon la revendication 1, dans lequel le détecteur (25) produit un signal numérique à un bit ayant une première valeur si aucun des contacts (15, 17) du groupe n'est excité, et une seconde valeur si au moins un contact (15, 17) du groupe est excité.

5. Circuit de puissance selon la revendication 4, comprenant un moyen formant circuit en pont pour chaque groupe (19) de contacts (15) montés en série avec la charge (11), et comportant quatre branches, une première branche comportant ledit groupe de contacts (15) mis en dérivation par des résistances, une seconde branche comprenant une première résistance de référence (R3) montée en série avec la première branche au niveau d'un premier noeud commun (29), et une troisième et une quatrième branches comportant une seconde et une troisième résistances de référence (R5, R6) respectivement montées en série au niveau d'un second noeud commun (31), lesdites première et seconde branches montées en série étant montées en parallèle avec les troisième et quatrième branches montées en série, et dans lequel le détecteur comporte un comparateur (33) monté entres lesdits premier et second noeuds (29, 31), les valeurs desdites première, seconde et troisième résistances de référence (R3, R5, R6) étant choisies par rapport aux résistances R1 mettant lesdits contacts en dérivation, de telle sorte que lorsqu'aucun desdits contacts n'est excité, le comparateur (33) produit un premier signal de sortie, et, lorsqu'au moins un desdits contacts est excité, le comparateur (33) produit un second signal de sortie, en dépit de variations de la tension de sortie de la source d'alimentation électrique.

6. Circuit d'interface de puissance selon la revendication 5, dans lequel une troisième branche commune et une quatrième branche commune sont partagées par les circuits en pont correspondant à chacun des groupes (19) de contacts.

7. Procédé pour tester un circuit d'alimentation pour un système de protection dans un système complexe de commande de processus sans interrompre la fonction de protection, où le circuit d'alimentation comprend m ensembles de m-1 contacts agencés en une pluralité de m groupes de contacts, chaque groupe de contacts étant monté en série avec les autres groupes et avec une charge à une source de tension, chaque groupe de contacts comprenant une sélection différente de m-1 contacts montés en parallèle appartenant chacun à un ensemble différent parmi lesdits m ensembles de contacts, de telle sorte que la charge est excitée lorsqu'au moins 2 desdits m ensembles de contacts sont excités, ledit procédé comprenant les étapes de:
mise en dérivation de chacun desdits groupes de contacts à l'aide d'une résistance pour former un parcours de fuite à travers ledit agencement de contacts, la valeur desdites résistances étant supérieure de plusieurs ordres de grandeur à celle d'un contact fermé, de telle sorte que la courant passant par le parcours de fuite est insuffisant pour exciter la charge mais suffisant pour être modifié d'une façon mesurable par la sollicitation d'un contact;
sollicitation d'un desdits m ensembles de contacts; et
mesure de l'effet qu'a cette sollicitation sur le courant pris à la source de tension.

8. Procédé selon la revendication 7, comprenant la détermination du courant pris à la source de tension pour des modèles prédéterminés d'excitation desdits contacts pendant le fonctionnement dudit système de protection, le contrôle du courant pris à la source de tension, et la comparaison du courant contrôlé avec le courant déterminé pour le modèle d'excitation en vigueur desdits contacts afin de déterminer si tous les contacts ont été excités conformément au modèle d'excitation en vigueur.

**Patentansprüche**

1. Eine prüfbare zwei-aus-drei gewählte Logik-Interface-Schaltung für eine elektrische Prozeßisteueranordnung, bestehend aus:

einer Last (11);

einer an die Last (11) anschließbaren Spannungsquelle (2);

einem Stromdetektor (25) zum Messen des von der Spannungsquelle (2) entnommenen Stromes;

drei Schalterpaaren (15, 17), die in drei Gruppen von je zwei Schaltern angeschlossen sind, wobei die zwei Schalter in jeder Gruppe parallel geschaltet und einem anderen Schalterpaar zugeordnet sind, die drei Schaltergruppen in Reihe miteinander und über die Spannungsquelle (2) mit der Last (11) verbunden sind;

Mitteln (5) zur Erzeugung von drei unabhängigen Ansprechsignalen;

Mitteln zum Aufbringen eines von den anderen differenten Ansprechsignals, unabhängig auf eines der Schalterpaare (15, 17), um dieses zu betätigen und dabei die Last (11) nur zu erregen, wenn mindestens zwei aus den drei Ansprechsignalen erzeugt werden, wobei die Schaltung **dadurch gekennzeichnet** ist, daß ein Parallelwiderstand (23) für jedes Schalterpaar vorgesehen ist, um zwischen der Spannungsquelle (2) und der Last (11) durch jede Schaltergruppe einen Nebenschluß zu schaffen; wobei die Impedanz der Widerstände (23) um mehrere Größenordnungen größer ist als die Impedanz eines geschlossenen Schalters, derart, daß der Strom durch den Nebenschluß nicht ausreicht, um die Last (11) zu erregen, aber für den Stromdetektor (25) ausreicht, um anzuzeigen, ob ein Schalter betätigt ist, wobei die Arbeit der Schalter getestet werden kann, ohne die Last (11) zu erregen, indem man jeweils ein Ansprechsignal separat erzeugt.

2. Stromkreis nach Anspruch 1, **dadurch gekennzeichnet**, daß die Last (11) ein normal erregtes Gerät ist und worin die Schalter (15) normalerweise geschlossen sind, aber offen sind, wenn sie durch die zugeordneten Ansprechsignale betätigt werden, derart, daß die Last (11) normal erregt und durch die Erzeugung von mindestens zwei-aus-drei Ansprechsignalen abgeschaltet ist.

3. Stromkreis nach Anspruch 1, **dadurch gekennzeichnet**, daß die Schalter (15) normalerweise offen sind und durch das zugeordnete Ansprechsignal geschlossen werden, derart, daß die Last (11) normal abgeschaltet, aber durch die Erzeugung von mindestens zwei der drei Ansprechsignale erzeugt wird.

4. Stromkreis nach Anspruch 1, **dadurch gekennzeichnet**, daß der Detektor (25) ein Ein-Bit-Digitalsignal erzeugt, das einen Wert hat, wenn kein Schalter (15) in der Gruppe betätigt wird und einen zweiten Wert aufweist, wenn mindestens ein Schalter (15, 17) in der Gruppe betätigt wird.

5. Stromkreis nach Anspruch 4, **dadurch gekennzeichnet**, daß eine Brückenschaltung für jede Gruppe (19) der Schalter (15) in Reihe mit der Last (11) angeschlossen ist und vier Schaltungsausgänge aufweist, wobei ein erster Ausgang die Gruppe der dem Widerstand nebenangeschlossenen Schalter (15) umfaßt, ein zweiter Ausgang einen ersten Referenzwiderstand (R3) umfaßt, der in Reihe mit dem ersten Ausgang an einem ersten gemeinsamen Verzweigungspunkt (29) geschaltet ist, ein dritter und vierter Ausgang zweite und dritte Bezugswiderstände (R5, R6) umfaßt, die entsprechend in Reihe mit einem zweiten gemeinsamen Verzweigungspunkt (31) geschaltet sind, die in Reihe geschalteten ersten und zweiten Ausgänge parallel mit den in Reihe geschalteten dritten und vierten Ausgängen geschaltet sind, und worin der Detektor einen Vergleicher (33) aufweist, der über die ersten und zweiten Verzweigungspunkte (21, 31) geschaltet ist, wobei die Werte der ersten, zweiten und dritten Referenzwiderstände (R3, R5, R6) im Bezug zu den die Schalter überbrückenden Widerständen (R1) gewählt sind, derart, daß, wenn keiner der Schalter betätigt ist, der Vergleicher (33) eine erste Ausgangsleistung hat und wenn mindestens einer der Schalter betätigt ist, der Vergleicher eine zweite Ausgangsleistung aufweist, trotz Änderungen im Spannungsausgang der elektrischen Stromquelle.

6. Stromkreis nach Anspruch 5, **dadurch gekennzeichnet**, daß ein gemeinsamer dritter und ein gemeinsamer vierter Schaltungsausgang von den Brückenschaltungen gemeinsam genutzt wird, die jeder Gruppe (19) der Schalter zugeordnet sind.

7. Verfahren zum Prüfen eines Arbeitsstromkreises für ein Sicherheitssystem in einem komplexen Prozeßsteuersystem ohne die Sicherheitsfunktion zu unterbrechen, worin der Arbeitsstromkreis m Sätze von m-1 Schaltern aufweist, die in einer Vielzahl von m-Schaltergruppen angeordnet sind, wobei jede Schaltergruppe in Reihe mit den anderen Gruppen und über eine Spannungsquelle mit einer Last verbunden ist, jede Schaltergruppe eine unterschiedliche Auswahl von m-1 Schalter aufweist, die parallel geschaltet sind, und zwar jeder von einem verschiedenen der m-Schaltersätze, derart, daß, wenn mindestens zwei der Schaltersätze erregt sind, Last anliegt, wobei das Verfahren **dadurch**

**gekennzeichnet** ist, daß jede Schaltergruppe mit einem Widerstand parallelgeschlossen wird, um einen Nebenschluß durch die Schalteranordnung zu bilden, wobei der Widerstand der Widerstände um mehrere Größenordnungen größer ist als derjenige eines geschlossenen Schalters, derart, daß der Stromfluß durch den Nebenschluß nicht ausreicht, um die Last anzuregen, aber ausreicht, um durch Betätigung eines Schalters meßbar verändert zu werden; daß einer der m-Schaltersätze betätigt wird und die Wirkung gemessen wird, die eine solche Betätigung auf den von der Spannungsquelle entnommenen Strom hat.

8. Verfahren nach Anspruch 7, **dadurch gekennzeichnet**, daß der von der Spannungsquelle entnommene Strom für vorbestimmte Erregungsmuster der Schalter während der Arbeit des Sicherheitssystems bestimmt wird, der von der Spannungsquelle entnommene Strom angezeigt wird, und der angezeigte Strom mit dem für das bestehende Erregungsmuster der Schalter ermittelten Strom verglichen wird, um festzustellen, ob alle Schalter entsprechend dem Erregungsmuster betätigt worden sind.

15

FIG. 1

FIG. 2

FIG.3

FIG. 4

FIG. 6

FIG. 7

Sq. Wave @ Input → On
No Signal @ Input → Off

Typ. Drive Circuit

FIG. 5